(19) Europäisches Patentamt
European Patent Office
Office européen des brevets

(11) **EP 1 125 981 B1**

(12) **EUROPEAN PATENT SPECIFICATION**

(45) Date of publication and mention
of the grant of the patent:
**13.11.2002   Bulletin 2002/46**

(51) Int Cl.[7]: **C08L 23/20**

(21) Application number: **01301424.6**

(22) Date of filing: **19.02.2001**

(54) **Poly-1-butene resin composition and pipe comprising the composition**

Zusammensetzung von Poly-1-Butenharz und die Zusammensetzung enthaltendes Wasserrohr

Composition de résine de poly-1-butène et tuyau d'eau contenant la composition

(84) Designated Contracting States:
**DE FR GB**

(30) Priority: **17.02.2000   JP 2000045104**
**15.01.2001   JP 2001006280**

(43) Date of publication of application:
**22.08.2001   Bulletin 2001/34**

(73) Proprietor: **Mitsui Chemicals, Inc.**
**Tokyo 100-6070 (JP)**

(72) Inventor: **Tokui, Shin**
**Ichihara-shi, Chiba (JP)**

(74) Representative: **Cresswell, Thomas Anthony**
**J.A. KEMP & CO.**
**14 South Square**
**Gray's Inn**
**London WC1R 5JJ (GB)**

(56) References cited:
**EP-A- 0 124 664          EP-A- 0 310 393**

**Description**

FIELD OF THE INVENTION

The present invention relates to a poly-1-butene resin composition and a pipe comprising the composition. More particularly, the invention relates to a poly-1-butene resin composition having excellent high-speed moldability into a pipe such as a cold or hot water pipe, particularly a cold or hot water supply color pipe, and also relates to a pipe comprising the composition.

BACKGROUND OF THE INVENTION

A poly-1-butene resin is favorable for cold or hot water pipes such as cold or hot water supply pipes because it is excellent in creep properties at high temperatures and stress cracking resistance and has flexibility and good workability.

The cold or hot water supply pipes are usually obligated to be colored according to the standard, e.g., JIS in Japan, and the main color of the pipes is beige. As for the sizes, the cold or hot water supply pipes mainly have small to medium bore diameters (approx. 8 - 50 mm).

The molding rates to produce the pipes differ with the sizes of the pipes. The cold or hot water supply pipes have heretofore been produced by the use of a resin composition comprising a poly-1-butene resin, a pigment and as a pigment dispersant a low-density ethylene/propylene copolymer wax or a wax obtained by thermal decomposition of high-pressure low-density polyethylene (HPLDPE). This resin composition is inferior to a poly-1-butene resin containing no pigment and no pigment dispersant in the high-speed moldability into pipes.

For example, it has been found by the experiments of the present inventors that the use of the poly-1-butene resin containing no pigment makes it possible to produce a pipe having an outer diameter of 15 mm and an inner diameter of 11 mm at a rate of 25 m/min. On the other hand, in the use of the resin composition comprising poly-1-butene, a pigment (gray color) and as a pigment dispersant an ethylene/propylene copolymer wax or a wax obtained by thermal decomposition of HPLDPE, the limit of the molding rate to produce a color pipe having an outer diameter of 15 mm and an inner diameter of 11 mm is 18 m/min. Thus, the resin composition comprising the poly-1-butene resin, the pigment and the ethylene/propylene copolymer wax is inferior to the poly-1-butene resin containing no pigment in the high-speed moldability, and the reason is that the addition of the pigment to the poly-1-butene resin makes a die swell ratio larger in the molding process and the resulting pipe catches in the sizing zone of the extrusion molding machine to meet with large resistance.

The present inventors have earnestly studied in order to obtain such a poly-1-butene resin composition containing a pigment as is capable of producing a cold or hot water supply pipe at a molding rate almost equal to or higher than that of the poly-1-butene resin containing no pigment, and as a result, they have found that the die swell ratio having an influence on the pipe molding rate depends greatly upon the type of the pigment dispersant contained in the poly-1-butene resin composition. The present inventors have further studied and found that:

by the use of a poly-1-butene resin composition which comprises a poly-1-butene resin having a specific melt flow rate and polyethylene having a viscosity-average molecular weight (Mv) of 900 to 29,000 and/or polypropylene having a viscosity-average molecular weight (Mv) of 900 to 29,000 and in which the content of the polyethylene and/or the polypropylene is in the range of 0.001 to 5 parts by weight based on 100 parts by weight of the poly-1-butene resin, a pipe having an outer diameter of 15 mm and an inner diameter of 11 mm can be produced at a higher rate (e. g., 33 m/min) than that of the conventional poly-1-butene resin containing no pigment, and

by the use of a poly-1-butene resin composition which comprises a poly-1-butene resin having a specific melt flow rate, a pigment and homopolyethylene having a viscosity-average molecular weight (Mv) of 900 to 29,000 and/or homopolypropylene having a viscosity-average molecular weight (Mv) of 900 to 29,000 as a pigment dispersant and in which the content of the homopolyethylene and/or the homopolypropylene is in the range of 0.001 to 5 parts by weight based on 100 parts by weight of the poly-1-butene resin, a pipe having an outer diameter of 15 mm and an inner diameter of 11 mm can be produced at a rate of 33 m/min.

Based on the finding, the present invention has been accomplished.

OBJECT OF THE INVENTION

The present invention is intended to solve such problems associated with the prior art as described above, and it is an object of the invention to provide a poly-1-butene resin composition having excellent high-speed moldability into a pipe such as a cold or hot water pipe, particularly a cold or hot water supply color pipe. It is another object of the invention to provide a pipe comprising the composition.

SUMMARY OF THE INVENTION

The poly-1-butene resin composition according to the invention is a composition comprising:

(A) a poly-1-butene resin having a melt flow rate (MFR, ASTM D 1238, 190°C, load of 2.16 kg) of 0.01 to 50 g/10 min, and
(B) polyethylene having a viscosity-average molecular weight (Mv) of 900 to 29,000 and/or
(C) polypropylene having a viscosity-average molecular weight (Mv) of 900 to 29,000,

wherein the content of the polyethylene (B) and/or the polypropylene (C) is in the range of 0.001 to 5 parts by weight based on 100 parts by weight of the poly-1-butene resin (A).
The density of the polyethylene (B) is desired to be in the range of 0.94 to 0.98 g/cm$^3$.
It is preferable that the polyethylene (B) is homopolyethylene (B1) and the polypropylene (C) is homopolypropylene (C1).
The polyethylene (B) and/or the polypropylene (C) may be used as a pigment dispersant. That is, in the poly-1-butene resin composition of the invention, a pigment (D) can be further contained.
The poly-1-butene resin composition containing a pigment (D) according to the invention is preferably a composition comprising:

(A) a poly-1-butene resin having a melt flow rate (MFR, ASTM D 1238, 190°C, load of 2.16 kg) of 0.01 to 50 g/10 min,
(D) a pigment, and
(B1) homopolyethylene having a viscosity-average molecular weight (Mv) of 900 to 29,000 and/or
(C1) homopolypropylene having a viscosity-average molecular weight (Mv) of 900 to 29,000, which serves as a pigment dispersant,

wherein the content of the homopolyethylene (B1) and/or the homopolypropylene (C1) is in the range of 0.001 to 5 parts by weight based on 100 parts by weight of the poly-1-butene resin (A).
The poly-1-butene resin composition of the invention is preferably a poly-1-butene resin composition capable of being molded into a pipe having an outer diameter of 15 mm and an inner diameter of 11 mm at a rate of 33 m/min.
The poly-1-butene resin composition of the invention is favorably used for producing a pipe such as a cold or hot water pipe, particularly a cold or hot water supply color pipe.
The pipe, the cold or hot water pipe and the cold or hot water supply color pipe according to the invention comprise the above-mentioned poly-1-butene resin composition of the invention.

DETAILED DESCRIPTION OF THE INVENTION

The poly-1-butene resin composition according to the invention and the pipe comprising the composition are described in detail hereinafter.
The poly-1-butene resin composition of the invention comprises a specific poly-1-butene resin (A), specific polyethylene (B) and/or specific polypropylene (B), and if necessary, a pigment (D).

Poly-1-butene resin (A)

The poly-1-butene resin (A) for use in the invention is, for example, a homopolymer of 1-butene or a 1-butene/$\alpha$-olefin copolymer obtained by copolymerizing 1-butene with an $\alpha$-olefin other than 1-butene, such as ethylene or propylene.
In the 1-butene/$\alpha$-olefin copolymer, the content of constituent units derived from an $\alpha$-olefin other than 1-butene is not more than 40 % by mol, preferably not more than 20 % by mol, more preferably not more than 10 % by mol.
Composition of the 1-butene/$\alpha$-olefin copolymer can be determined by measuring a $^{13}$C-NMR spectrum of a sample solution obtained by homogeneously dissolving about 200 mg of the 1-butene/$\alpha$-olefin copolymer in 1 ml of hexachlorobutadiene in a sample tube with a diameter of usually 10 mm, under the measuring conditions of a measuring temperature of 120°C, a measuring frequency of 25.05 MHz, a spectral width of 1500 Hz, a pulse repetition time of 4.2 sec and a pulse width of 6 $\mu$sec.
The melt flow rate (MFR, ASTM D 1238, 190°C, load of 2.16 kg) of the poly-1-butene resin (A) for use in the invention is in the range of 0.01 to 50 g/10 min, preferably 0.05 to 10 g/10 min, more preferably 0.1 to 0.8 g/10 min. The poly-1-butene resin (A) having a melt flow rate of the above range shows flexibility and has excellent creep resistance, impact resistance, abrasion resistance, chemical resistance and stress cracking resistance.

The poly-1-butene resin (A) can be prepared by a hitherto known process, for example, a process of polymerizing 1-butene only or copolymerizing 1-butene with an $\alpha$-olefin other than 1-butene, such as ethylene or propylene, in the presence of a Ziegler-Natta catalyst or a metallocene catalyst.

Polyethylene (B)

The polyethylene (B) for use in the invention is, for example, homopolyethylene (B1) or an ethylene/$\alpha$-olefin copolymer (B2) obtained by copolymerizing ethylene with an $\alpha$-olefin of 3 to 20 carbon atoms and containing constituent units derived from ethylene in amounts of not less than 50 % by mol and less than 100 % by mol.

Examples of the $\alpha$-olefins of 3 to 20 carbon atoms include propylene, 1-butene, 1-pentene, 1-hexene, 4-methyl-1-pentene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene and 1-eicosene. Of these, preferable are propylene, 1-butene, 4-methyl-1-pentene, 1-hexene and 1-octene.

The polyethylene (B) for use in the invention has a viscosity-average molecular weight (Mv) of 900 to 29,000, preferably 2,000 to 20,000. When the polyethylene (B), preferably homopolyethylene (B1), having a viscosity-average molecular weight of the above range is used, a poly-1-butene resin composition having excellent high-speed moldability into colorless pipes can be obtained.

When a pigment (D) is used together with the polyethylene (B), preferably homopolyethylene (B1), the polyethylene (B) functions as a pigment dispersant, and hence a poly-1-butene resin composition having excellent high-speed moldability into color pipes can be obtained.

The viscosity-average molecular weight (Mv) of the polyethylene (B) is measured in the following manner. A falling period of time (sec) is automatically measured at 135°C using an Atlantic type viscometer to determine a specific viscosity of a decalin solution of a sample. From the intrinsic viscosity ($\eta$) and the following formulas, the viscosity-average molecular weight (Mv) is calculated.

$$\eta SP = (t-t_0)/t_0$$

wherein $\eta SP$ is a specific viscosity, $t_0$ is a falling period of time (sec) of decalin, and t is a falling period of time (sec) of a sample solution.

C = sample weight/0.549358
wherein C is a solution concentration.

$$(\eta) = \eta SP/C(1+K \cdot \eta SP)$$

wherein K is a constant and is 0.28.

$$Mv = 5.37 \times 10^4 \times (\eta)^{1.37}$$

The density (JIS K 6760) of the polyethylene (B) such as homopolyethylene (B1) for use in the invention is desired to be in the range of 0.94 to 0.98 g/cm$^3$, preferably 0.95 to 0.98 g/cm$^3$.

The crystallinity of the polyethylene (B), as measured by X-ray diffractometry, is desired to be in the range of 80 to 95 %.

It is preferable to directly prepare the low-molecular weight and high-density polyethylene (B) by polymerizing ethylene or copolymerizing ethylene with an $\alpha$-olefin of 3 to 20 carbon atoms in the presence of a known olefin polymerization catalyst such as a Ziegler type olefin polymerization catalyst. The polyethylene (B) may be a thermal decomposition product of high-molecular weight polyethylene.

The polyethylene (B) is used in an amount of 0.001 to 5 parts by weight, preferably 0.001 to 2 parts by weight, more preferably 0.001 to 0.5 part by weight, based on 100 parts by weight of the poly-1-butene resin (A). When the polyethylene (B), particularly the homopolyethylene (B1), is used in the above amount, a poly-1-butene resin composition having excellent high-speed moldability into pipes can be obtained.

Polypropylene (C)

The polypropylene (C) for use in the invention is, for example, homopolypropylene (C1) or a propylene/$\alpha$-olefin copolymer (C2) obtained by copolymerizing propylene with an $\alpha$-olefin of 2 to 20 carbon atoms other than propylene and containing constituent units derived from propylene in amounts of not less than 50 % by mol and less than 100 % by mol.

Examples of the α-olefins of 2 to 20 carbon atoms other than propylene include ethylene, 1-butene, 1-pentene, 1-hexene, 4-methyl-1-pentene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene and 1-eicosene. Of these, preferable are ethylene, 1-butene, 4-methyl-1-pentene, 1-hexene and 1-octene.

The polypropylene (C) for use in the invention has a viscosity-average molecular weight (Mv) of 900 to 29,000, preferably 3,000 to 29,000, more preferably 7,000 to 29,000. When the polypropylene (C), preferably homopolypropylene (C1), having a viscosity-average molecular weight of the above range is used, a poly-1-butene resin composition having excellent high-speed moldability into colorless pipes can be obtained.

When a pigment (D) is used together with the polypropylene (C), preferably homopolypropylene (C1), the polypropylene (C) functions as a pigment dispersant, and hence a poly-1-butene resin composition having excellent high-speed moldability into color pipes can be obtained.

The viscosity-average molecular weight (Mv) of the polypropylene (C) is measured in the same manner as to measure the viscosity-average molecular weight (Mv) of the polyethylene (B). In this case, however, the constant K in the aforesaid formula is 0.38.

The density (JIS K 6760) of the polypropylene (C) such as homopolypropylene (C1) for use in the invention is desired to be in the range of 0.89 to 0.93 g/cm$^3$.

The crystallinity of the polypropylene (C), as measured by X-ray diffractometry, is desired to be in the range of 50 to 70 %.

The low-molecular weight polypropylene (C) such as homopolypropylene (C1) may be a product obtained by thermal decomposition of homopolypropylene having a viscosity-average molecular weight (Mv) of more than 29,000, or may be one obtained by directly polymerizing homopolypropylene having a viscosity-average molecular weight (Mv) of 900 to 29,000.

It is preferable to directly prepare the low-molecular weight propylene/α-olefin copolymer (C2) by copolymerizing propylene with an α-olefin of 2 to 20 carbon atoms other than propylene in the presence of a known olefin polymerization catalyst such as a Ziegler type olefin polymerization catalyst.

The polypropylene (C) is used in an amount of 0.001 to 5 parts by weight, preferably 0.001 to 2 parts by weight, more preferably 0.001 to 0.5 part by weight, based on 100 parts by weight of the poly-1-butene resin (A). When the polypropylene (C), particularly the homopolypropylene (C1), is used in the above amount, a poly-1-butene resin composition having excellent high-speed moldability into pipes can be obtained.

Pigment (D)

The pigment (D) that is optionally used in the invention is a hitherto known pigment and is a pigment usually used for cold or hot water pipes such as cold or hot water supply pipes.

Examples of the pigments include carbon black, rutile titanium, ultramarine, isoindolenone red, titanium yellow, quinacridone red, perylene red, condensed azo red, isoindolenone orange, isoindolenone yellow, phthalocyanine blue, phthalocyanine green and red iron oxide.

These pigments can be used singly or in combination of two or more kinds.

The pigment (D) is used in an amount of usually 0.05 to 10 parts by weight based on 100 parts by weight of the poly-1-butene resin (A), thought the amount varies depending upon the intended color of the pipe, the type of the pigment and the like.

Poly-1-butene resin composition

The poly-1-butene resin composition according to the invention comprises the poly-1-butene resin (A), the polyethylene (B) and/or the polypropylene (C), and if necessary, the pigment (D), as described above.

The poly-1-butene resin composition of the invention is preferably a poly-1-butene resin composition capable of being molded into a colorless or color pipe having an outer diameter of 15 mm and an inner diameter of 11 mm at a rate of 33 m/min.

The poly-1-butene resin composition of the invention can be prepared by, for example, melt kneading the components in the aforesaid specific ratio.

The kneading can be carried out using a kneading device, such as a single-screw extruder, a twin-screw extruder, a twin-screw kneader or a Banbury mixer.

The poly-1-butene resin composition of the invention can be prepared also by melt kneading a masterbatch comprising the poly-1-butene resin (A), the polyethylene (B) and/or the polypropylene (C), and optionally, the pigment (D), with the poly-1-butene resin (A). It is preferable to prepare the poly-1-butene resin composition of the invention using the masterbatch from the viewpoint of cost reduction due to rationalization.

To the poly-1-butene resin composition of the invention, additives, such as heat stabilizer, weathering stabilizer, antistatic agent, mildewproofing agent, rust preventive, lubricant and filler, may be optionally added in amounts not detrimental to the objects of the invention.

Pipe

The pipe, the cold or hot water pipe and the cold or hot water supply color pipe according to the invention comprise the poly-1-butene resin composition described above. There is no specific limitation on the color of the pipes. Although gray and beige are common colors, other colors may be adopted.

There is no specific limitation on the shape of the pipe, the cold or hot water pipe and the cold or hot water supply color pipe according to the invention, and any sectional shape such as circle or polygon may be adopted.

These pipes usually have an inner diameter of 3 to 500 mm, an outer diameter of 5 to 600 mm and a wall thickness of 1 to 50 mm.

The pipe, the cold or hot water pipe and the cold or hot water supply color pipe according to the invention can be produced by an extrusion molding method hitherto known.

EFFECT OF THE INVENTION

The poly-1-butene resin composition of the invention contains specific polyethylene and/or specific polypropylene and optionally a pigment in addition to a specific poly-1-butene resin, so that the composition has excellent high-speed moldability into colorless or color pipes. By the use of the composition, colorless or color pipes can be produced at a molding rate almost equal to or higher than the highest molding rate (25 m/min) to produce the conventional colorless pipes, and hence the composition is favorable for application to cold or hot water pipes, particularly cold or hot water supply color pipes.

The pipe, the cold or hot water pipe and the cold or hot water supply color pipe according to the invention comprise the poly-1-butene resin composition having excellent high-speed moldability, and hence they are excellent in productivity and their production cost can be reduced.

EXAMPLE

The present invention is further described with reference to the following examples, but it should be construed that the invention is in no way limited to those examples.

Example 1

First, 100.0 parts by weight of a masterbatch consisting of 69.3 parts by weight of a poly-1-butene resin (PB, density (ASTM D 1505): 0.918 g/cm$^3$, melt flow rate (ASTM D 1238, 190°C, load of 2.16 kg): 0.5 g/10 min), 16.7 parts by weight of titanium white, 0.4 part by weight of carbon black, 3.6 parts by weight of ultramarine and 10.0 parts by weight of homopolyethylene (PE (1), viscosity-average molecular weight (Mv): 4,000, density (JIS K 6760): 0.98 g/cm$^3$, crystallinity: 85 %, melting point: 126°C) as a pigment dispersant were prepared.

Then, 2 parts by weight of the masterbatch and 98 parts by weight of the poly-1-butene resin (PB) were melt kneaded at 200°C and granulated by the use of a single-screw extruder equipped with a pelletizer to obtain pellets of a poly-1-butene resin composition.

The pellets of the poly-1-butene resin composition were extrusion molded under the following conditions to obtain a gray pipe having an outer diameter of 15 mm, an inner diameter of 11 mm and a wall thickness of 2 mm. The molding rate to produce the pipe was 33 m/min, and the appearance of the pipe was good.

Extrusion molding conditions

Extruder: extruder equipped with gear pump (article number: SX-90), manufactured by Ikegai K.K.
Preset temperature: C1/C2/C3/C4/C5/AD/GP/D1/D2/D3 = 160/170/180/180/180/180/180/160/160/160°C
Size of pipe: outer diameter = 15 mm, inner diameter = 11 mm, wall thickness = 2 mm
Shape of die: inner diameter of die = 15 mm, outer diameter of pin = mm, land length: 20 mm
Degree of vacuum: 40 mmHg
Cooling temperature: 15°C

From the pipe, a specimen for measuring a tensile stress at yield and a tensile elongation was prepared. The specimen was subjected to the following tensile test to measure a tensile stress at yield and a tensile elongation. The results are set forth in Table 1.

Tensile test

The tensile test was carried out under the following conditions.

Size of specimen: 2 mm (thickness) $\times$ 60 mm (length) $\times$ 5 mm (width)
Measuring temperature: 23°C
Pulling rate: 50 mm/min

Example 2

100.0 Parts by weight of a masterbatch were prepared in the same manner as in Example 1, except that 10.0 parts by weight of homopolyethylene (PE (2), viscosity-average molecular weight (Mv): 8,000, density (JIS K 6760): 0.97 g/cm$^3$, crystallinity: 84 %, melting point: 127°C) were used instead of 10.0 parts by weight of the homopolyethylene (PE (1)). Using the masterbatch, pellets of a poly-1-butene resin composition were prepared in the same manner as in Example 1.
Then, using the pellets of the poly-1-butene resin composition, a gray pipe having an outer diameter of 15 mm, an inner diameter of 11 mm and a wall thickness of 2 mm was produced in the same manner as in Example 1. The molding rate to produce the pipe was 33 m/min, and the appearance of the pipe was good.
From the pipe, a specimen for measuring a tensile stress at yield and a tensile elongation was prepared. The specimen was subjected to the aforesaid tensile test to measure a tensile stress at yield and a tensile elongation. The results are set forth in Table 1.

Example 3

100.0 Parts by weight of a masterbatch were prepared in the same manner as in Example 1, except that 5.0 parts by weight of the homopolyethylene (PE (1)) and 5.0 parts by weight of the homopolyethylene (PE (2)) were used instead of 10.0 parts by weight of the homopolyethylene (PE (1)). Using the masterbatch, pellets of a poly-1-butene resin composition were prepared in the same manner as in Example 1.
Then, using the pellets of the poly-1-butene resin composition, a gray pipe having an outer diameter of 15 mm, an inner diameter of 11 mm and a wall thickness of 2 mm was produced in the same manner as in Example 1. The molding rate to produce the pipe was 33 m/min, and the appearance of the pipe was good.
From the pipe, a specimen for measuring a tensile stress at yield and a tensile elongation was prepared. The specimen was subjected to the aforesaid tensile test to measure a tensile stress at yield and a tensile elongation. The results are set forth in Table 1.

Example 4

100.0 Parts by weight of a masterbatch were prepared in the same manner as in Example 1, except that 10.0 parts by weight of homopolypropylene (PP (1), viscosity-average molecular weight (Mv): 19,000, density (JIS K 6760): 0.90 g/cm$^3$, crystallinity: 60 %, melting point: 143°C and 150°C) obtained by thermal decomposition of polypropylene were used instead of 10.0 parts by weight of the homopolyethylene (PE (1)). Using the masterbatch, pellets of a poly-1-butene resin composition were prepared in the same manner as in Example 1.
Then, using the pellets of the poly-1-butene resin composition, a gray pipe having an outer diameter of 15 mm, an inner diameter of 11 mm and a wall thickness of 2 mm was produced in the same manner as in Example 1. The molding rate to produce the pipe was 33 m/min, and the appearance of the pipe was good.
From the pipe, a specimen for measuring a tensile stress at yield and a tensile elongation was prepared. The specimen was subjected to the aforesaid tensile test to measure a tensile stress at yield and a tensile elongation. The results are set forth in Table 1.

Comparative Example 1

100.0 Parts by weight of a masterbatch were prepared in the same manner as in Example 1, except that 10.0 parts by weight of an ethylene/propylene copolymer wax (PE (3), viscosity-average molecular weight (Mv): 3,000, density (JIS K 6760): 0.93 g/cm$^3$, crystallinity: 70 %, melting point: 107°C) were used instead of 10.0 parts by weight of the homopolyethylene (PE (1)). Using the masterbatch, pellets of a poly-1-butene resin composition were prepared in the same manner as in Example 1.

Then, using the pellets of the poly-1-butene resin composition, a gray pipe having an outer diameter of 15 mm, an inner diameter of 11 mm and a wall thickness of 2 mm was produced in the same manner as in Example 1. The molding rate to produce the pipe was 18 m/min, and the appearance of the pipe was good.

From the pipe, a specimen for measuring a tensile stress at yield and a tensile elongation was prepared. The specimen was subjected to the aforesaid tensile test to measure a tensile stress at yield and a tensile elongation. The results are set forth in Table 1.

Comparative Example 2

100.0 Parts by weight of a masterbatch were prepared in the same manner as in Example 1, except that 10.0 parts by weight of a wax (PE (4), viscosity-average molecular weight (Mv): 4,300, density (JIS K 6760): 0.92 g/cm$^3$, crystallinity: 54 %, melting point: 105°C) obtained by thermal decomposition of HPLDPE were used instead of 10.0 parts by weight of the homopolyethylene (PE (1)). Using the masterbatch, pellets of a poly-1-butene resin composition were prepared in the same manner as in Example 1.

Then, using the pellets of the poly-1-butene resin composition, a gray pipe having an outer diameter of 15 mm, an inner diameter of 11 mm and a wall thickness of 2 mm was produced in the same manner as in Example 1. The molding rate to produce the pipe was 18 m/min, and the appearance of the pipe was good.

From the pipe, a specimen for measuring a tensile stress at yield and a tensile elongation was prepared. The specimen was subjected to the aforesaid tensile test to measure a tensile stress at yield and a tensile elongation. The results are set forth in Table 1.

Reference Example

A pipe having an outer diameter of 15 mm, an inner diameter of 11 mm and a wall thickness of 2 mm was produced in the same manner as in Example 1, except that only the poly-1-butene resin (PB) was used instead of the poly-1-butene resin composition. The molding rate to produce the pipe was 25 m/min, and the appearance of the pipe was good.

From the pipe, a specimen for measuring a tensile stress at yield and a tensile elongation was prepared. The specimen was subjected to the aforesaid tensile test to measure a tensile stress at yield and a tensile elongation. The results are set forth in Table 1.

Examples 5 - 8

The procedure of Example 1 or Example 3 was repeated, except that the pigment dispersant was used in the amount shown in Table 1. The results are set forth in Table 1.

Comparative Examples 3 and 4

The procedure of Comparative Example 2 was repeated, except that the pigment dispersant was used in the amount shown in Table 1. The results are set forth in Table 1.

Comparative Example 5

The procedure of Comparative Example 1 was repeated, except that, in addition to PE (3), PE (4) was used as the pigment dispersant in the amount shown in Table 1. The results are set forth in Table 1.

Table 1

| Pigment dispersant | Example 1 | Example 2 | Example 3 | Example 4 | Comp. Ex. 1 | Comp. Ex. 2 | Ref. Ex. |
|---|---|---|---|---|---|---|---|
| Type | PE(1) | PE(2) | PE(1)/PE(2) | PP(1) | PE(3) | PE(4) | — |
| Amount (Part(s) by weight) | 0.204 | 0.204 | 0.102/0.102 | 0.204 | 0.204 | 0.204 | — |
| Pipe molding rate (m/min.) | 33 | 33 | 33 | 33 | 18 | 18 | 25 |
| Color of pipe | Gray | Gray | Gray | Gray | Gray | Gray | |
| Properties of pipe | | | | | | | |
| Tensile stress at yield (MPa) | 18 | 18 | 18 | 18 | 18 | 18 | 18 |
| Tensile elongation (%) | 160 | 160 | 160 | 165 | 140 | 140 | 160 |

| Pigment dispersant | Example 5 | Example 6 | Example 7 | Example 8 | Com. Ex. 3 | Com. Ex. 4 | Comp. Ex. 5 |
|---|---|---|---|---|---|---|---|
| Type | PE(1) | PE(1) | PE(1)/PE(2) | PP(1)/PE(2) | PE(4) | PE(4) | PE(3)/PE(4) |
| Amount (Part(s) by weight) | 2.00 | 5.00 | 1.00/1.00 | 2.50/2.50 | 2.00 | 5.00 | 2.50/2.50 |
| Pipe molding rate (m/min.) | 33 | 33 | 33 | 33 | 18 | 18 | 15 |
| Color of pipe | Gray | Gray | Gray | Gray | Gray | Gray | Gray |
| Properties of pipe | | | | | | | |
| Tensile stress at yield (MPa) | 18 | 18 | 18 | 18 | 18 | 18 | 18 |
| Tensile elongation (%) | 160 | 165 | 160 | 165 | 135 | 125 | 125 |

Remarks 1 In Examples 1 to 8 and Comparative Examples 1 to 5, a poly-1-butene resin composition was prepared using a masterbatch.

2 The amount of the pigment dispersant in the table is based on 100 parts by weight of the poly-1-butene resin.

Examples 9 - 12, Comparative Examples 6 and 7

The procedures of Examples 1 to 4 and the procedures of Comparative Examples 1 and 2 were each repeated, except that no pigment was used. The results are set forth in Table 2.

# EP 1 125 981 B1

Examples 13 - 16, Comparative Examples 8 - 10

The procedures of Examples 5 to 8 and the procedures of Comparative Examples 3 to 5 were each repeated, except that no pigment was used. The results are set forth in Table 2.

Table 2

| | Example 9 | Example 10 | Example 11 | Example 12 | Com. Ex. 6 | Com. Ex. 7 |
|---|---|---|---|---|---|---|
| **Polyethylene, polypropylene** | | | | | | |
| Type | PE(1) | PE(2) | PE(1)/PE(2) | PP(1) | PE(3) | PE(4) |
| Amount (Part(s) by weight) | 0.204 | 0.204 | 0.102/0.102 | 0.204 | 0.204 | 0.204 |
| Pipe molding rate (m/min.) | 33 | 33 | 33 | 33 | 18 | 18 |
| **Properties of pipe** | | | | | | |
| Tensile stress at yield (MPa) | 18 | 18 | 18 | 18 | 18 | 18 |
| Tensile elongation (%) | 160 | 160 | 160 | 160 | 140 | 140 |

| | Example13 | Example14 | Example 15 | Example 16 | Com. Ex. 8 | Com. Ex. 9 | Com. Ex. 10 |
|---|---|---|---|---|---|---|---|
| **Polyethylene, polypropylene** | | | | | | | |
| Type | PE(1) | PE(1) | PE(1)/PE(2) | PP(1)/PE(2) | PE(4) | PE(4) | PE(3)/PE(4) |
| Amount (Part(s) by weight) | 2.00 | 5.00 | 1.00/1.00 | 2.50/2.50 | 2.00 | 5.00 | 2.50/2.50 |
| Pipe molding rate (m/min.) | 33 | 33 | 33 | 33 | 18 | 15 | 15 |
| **Properties of pipe** | | | | | | | |
| Tensile stress at yield (MPa) | 18 | 18 | 18 | 18 | 18 | 18 | 19 |
| Tensile elongation (%) | 160 | 165 | 160 | 165 | 130 | 125 | 125 |

Remarks 1 In Examples 9 to 16 and Comparative Examples 6 to 10, a poly-1-butene resin composition was prepared using a masterbatch.

2 The amount of the polyethylene and the amount of the polypropylene in the table are each based on 100 parts by weight of the poly-1-butene resin.

**Claims**

1. A poly-1-butene resin composition which comprises:

   100 parts by weight of poly-1-butene resin (A) having a melt flow rate (MFR, ASTM D 1238, 190°C, load of 2.16 kg) of 0.01 to 50 g/10 min; and
   at least one polyethylene (B) having a viscosity-average molecular weight (Mv) of 900 to 29,000 in an amount of 0 to 5 parts by weight; and/or
   at least one polypropylene (C) having a viscosity-average molecular weight (Mv) of 900 to 29,000 in an amount of 0 to 5 parts by weight,

   wherein the total content of polyethylenes (B) and polypropylenes (C) is in the range of 0.001 to 5 parts by weight based on 100 parts by weight of (A).

2. A composition according to claim 1, wherein (B) has a density of 0.94 to 0.98 g/cm$^3$.

3. A composition according to claim 1 or claim 2, wherein (B) is homopolyethylene (B1) and (C) is homopolypropylene (C1).

4. A composition according to any one of claims 1 to 3, wherein (B) and/or (C) is used as a pigment dispersant.

5. A composition according to one of claims 1 to 4, which further comprises pigment (D).

6. A poly-1-butene resin composition comprising:

   100 parts by weight of a poly-1-butene resin (A) having a melt flow rate (MFR, ASTM D 1238, 190 °C , load of 2.16 kg) of 0.01 to 50 g/10 min;
   pigment D; and, as pigment dispersant,
   at least one homopolyethylene (B1) having a viscosity-average molecular weight (Mv) of 900 to 29,000, in an amount of 0 to 5 parts by weight and/or
   at least one homopolypropylene (C1) having a viscosity-average molecular weight (Mv) of 900 to 29,000, in an amount of 0 to 5 parts by weight,

   wherein the total content of homopolyethylenes (B1) and homopolypropylenes (C1) is in the range of 0.001 to 5 parts by weight based on 100 parts by weight of (A).

7. Use of a composition according to any one of claims 1 to 6, for producing a pipe.

8. Use of a composition according to any of claims 1 to 6, for producing a cold or hot water pipe.

9. Use of a composition according to any one of claims 1 to 6 for producing a cold or hot water supply color pipe.

10. A pipe which comprises a composition according to any one of claims 1 to 6.

11. Use of a composition according to any one of claims 1 to 6, for producing a pipe having an outer diameter of 15 mm and an inner diameter of 11 mm.

12. A process for producing a pipe which process comprises extruding a composition according to any one of claims 1 to 6 at a rate of greater than 25 m/min.

**Patentansprüche**

1. Eine Zusammensetzung von Poly-1-butenharz, umfassend:

   100 Gewichtsteile Poly-1-butenharz (A), das eine Schmelzfließgeschwindigkeit (MFR, ASTM D 1238, 190°C, Last von 2,16 kg) von 0,01 bis 50 g/10 Min. aufweist; und
   wenigstens ein Polyethylen (B), das ein Viskositätsmittel-Molekulargewicht (Mv) von 900 bis 29·000 aufweist, in einer Menge von 0 bis 5 Gewichtsteilen; und/oder
wenigstens ein Polypropylen (C), das ein Viskositätsmittel-Molekulargewicht (Mv) von 900 bis 29·000 aufweist, in einer Menge von 0 bis 5 Gewichtsteilen,

worin der Gesamtgehalt an Polyethylenen (B) und Polypropylenen (C) im Bereich von 0,001 bis 5 Gewichtsteilen liegt, bezogen auf 100 Gewichtsteile (A).

2.  Eine Zusammensetzung gemäß Anspruch 1, worin (B) eine Dichte von 0,94 bis 0,98 g/cm$^3$ aufweist.

3.  Eine Zusammensetzung gemäß Anspruch 1 oder Anspruch 2, worin (B) ein Homopolyethylen (B1) ist und (C) ein Homopolypropylen (C1) ist.

4.  Eine Zusammensetzung gemäß einem der Ansprüche 1 bis 3, worin (B) und/oder (C) als Pigmentdispersionsmittel verwendet wird/werden.

5.  Eine Zusammensetzung gemäß einem der Ansprüche 1 bis 4, die zusätzlich ein Pigment (D) enthält.

6.  Eine Zusammensetzung von Poly-1-butenharz, umfassend:

    100 Gewichtsteile von einem Poly-1-butenharz (A), das eine Schmelzfließgeschwindigkeit (MFR, ASTM D 1238, 190°C, Last von 2,16 kg) von 0,01 bis 50 g/10 Min. aufweist;
    Pigment D; und, als Pigmentdispersionsmittel,
    wenigstens ein Homopolyethylen (B1), das ein Viskositätsmittel-Molekulargewicht (Mv) von 900 bis 29·000 aufweist, in einer Menge von 0 bis 5 Gewichtsteilen; und/oder
    wenigstens ein Homopolypropylen (C1), das ein Viskositätsmittel-Molekulargewicht (Mv) von 900 bis 29·000 aufweist, in einer Menge von 0 bis 5 Gewichtsteilen,

    worin der Gesamtgehalt an Homopolyethylenen (B1) und Homopolypropylenen (C1) im Bereich von 0,001 bis 5 Gewichtsteilen liegt, bezogen auf 100 Gewichtsteile (A).

7.  Die Verwendung von einer Zusammensetzung gemäß einem der Ansprüche 1 bis 6 zur Herstellung eines Rohrs.

8.  Die Verwendung von einer Zusammensetzung gemäß einem der Ansprüche 1 bis 6 zur Herstellung von einem Kalt- oder Warmwasserrohr.

9.  Die Verwendung von einer Zusammensetzung gemäß einem der Ansprüche 1 bis 6 zur Herstellung von einem Kalt- oder Warmwasserversorgungsfarbrohr.

10. Ein Rohr, das eine Zusammensetzung gemäß einem der Ansprüche 1 bis 6 umfasst.

11. Die Verwendung von einer Zusammensetzung gemäß einem der Ansprüche 1 bis 6 zur Herstellung von einem Rohr, das einen Außendurchmesser von 15 mm und einen Innendurchmesser von 11 mm aufweist.

12. Ein Verfahren zur Herstellung von einem Rohr, wobei das Verfahren das Extrudieren von einer Zusammensetzung gemäß einem der Ansprüche 1 bis 6 bei einer Geschwindigkeit von über 25 m/Min. umfasst.

**Revendications**

1.  Composition à base de résine de poly(butène-1), qui comprend :

    100 parties en poids de résine de poly(butène-1) (A) ayant un indice de fluidité à l'état fondu (IFF, ASTM D 1238, 190 °C , charge de 2,16 kg) de 0,01 à 50 g/10 minutes, et
    au moins un polyéthylène (B) ayant une masse moléculaire moyenne, déterminée par mesure de la viscosité (Mv) de 900 à 29 000, en une quantité de 0 à 5 parties en poids, et/ou
    au moins un polypropylène (C) ayant une masse moléculaire moyenne, déterminée par mesure de la viscosité (Mv) de 900 à 29 000, en une quantité de 0 à 5 parties en poids,
    la quantité totale de polyéthylène (B) et de polypropylène (C) étant comprise dans l'intervalle allant de 0,001 à 5 parties en poids pour 100 parties en poids de (A).

**2.** Composition selon la revendication 1, dont le constituant (B) a une masse volumique de 0,94 à 0,98 g/cm$^3$.

**3.** Composition selon la revendication 1 ou 2, dont le constituant (B) est un homopolyéthylène (B1) et le constituant (C) est un homopolypropylène (C1).

**4.** Composition selon l'une quelconque des revendications 1 à 3, dans laquelle on utilise (B) et/ou (C) comme dispersant d'un pigment.

**5.** Composition selon l'une quelconque des revendications 1 à 4, qui renferme en outre un pigment (D).

**6.** Composition à base de résine de poly(butène-1), qui comprend :

100 parties en poids d'une résine de poly(butène-1) (A) ayant un indice de fluidité à l'état fondu (IFF, ASTM D 1238, 190 °C, charge de 2,16 kg) de 0,01 à 50 g/10 minutes,
un pigment D et, comme dispersant du pigment,
au moins un homopolyéthylène (B1) ayant une masse moléculaire moyenne, déterminée par mesure de la viscosité (Mv) de 900 à 29 000, en une quantité de 0 à 5 parties en poids, et/ou
au moins un homopolypropylène (C1) ayant une masse moléculaire moyenne, déterminée par mesure de la viscosité (Mv) de 900 à 29 000, en une quantité de 0 à 5 parties en poids,
la quantité totale d'homopolyéthylène (B1) et d'homopolypropylène (C1) étant comprise dans l'intervalle allant de 0,001 à 5 parties en poids pour 100 parties en poids de (A).

**7.** Utilisation d'une composition selon l'une quelconque des revendications 1 à 6, pour la fabrication d'un tuyau.

**8.** Utilisation d'une composition selon l'une quelconque des revendications 1 à 6, pour la fabrication d'un tuyau d'eau froide ou d'eau chaude.

**9.** Utilisation d'une composition selon l'une quelconque des revendications 1 à 6, pour la fabrication d'un tuyau coloré, destiné à la fourniture d'eau froide ou d'eau chaude.

**10.** Tuyau comprenant une composition selon l'une quelconque des revendications 1 à 6.

**11.** Utilisation d'une composition selon l'une quelconque des revendications 1 à 6, pour la fabrication d'un tuyau ayant un diamètre externe de 15 mm et un diamètre interne de 11 mm.

**12.** Procédé de fabrication d'un tuyau, qui comprend l'extrusion d'une composition selon l'une quelconque des revendications 1 à 6, à une vitesse supérieure à 25 mètres par minute.